(19) Europäisches Patentamt / European Patent Office / Office européen des brevets

(11) **EP 2 989 421 B1**

(12) **EUROPÄISCHE PATENTSCHRIFT**

(45) Veröffentlichungstag und Bekanntmachung des Hinweises auf die Patenterteilung:
**20.12.2017 Patentblatt 2017/51**

(21) Anmeldenummer: **14719731.3**

(22) Anmeldetag: **24.04.2014**

(51) Int Cl.:
*B60W 30/095* (2012.01)    *B60W 40/06* (2012.01)
*B60W 30/12* (2006.01)    *B60W 40/072* (2012.01)
*B60W 50/14* (2012.01)

(86) Internationale Anmeldenummer:
**PCT/EP2014/058320**

(87) Internationale Veröffentlichungsnummer:
**WO 2014/174001 (30.10.2014 Gazette 2014/44)**

(54) **VERFAHREN ZUM BESTIMMEN EINES FAHRSPURVERLAUFES EINER FAHRSPUR**

METHOD FOR DETERMINING A LANE COURSE OF A LANE

PROCÉDÉ DE DÉTERMINATION DU TRACÉ D'UNE VOIE DE CIRCULATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.04.2013 DE 102013207658**

(43) Veröffentlichungstag der Anmeldung:
**02.03.2016 Patentblatt 2016/09**

(73) Patentinhaber: **Bayerische Motoren Werke Aktiengesellschaft
80809 München (DE)**

(72) Erfinder:
• **EICHHORN, Andreas
80538 München (DE)**
• **ZAHN, Peter
82211 Herrsching A. Ammersee (DE)**

(56) Entgegenhaltungen:
**WO-A1-2007/010317    WO-A1-2011/122150**

• **WENPING WANG ET AL: "Fitting B-Spline Curves to Point Clouds by Curvature-Based Squared Distance Minimization", ACM TRANSACTIONS ON GRAPHICS, Bd. 25, Nr. 2, 1. April 2006 (2006-04-01), Seiten 214-238, XP055128048, in der Anmeldung erwähnt**

**Beschreibung**

Die Erfindung betrifft ein Verfahren zum Bestimmen eines Fahrspurverlaufes einer Fahrspur mithilfe einer Vielzahl von aufgezeichneten Fahrtverläufen unter Verwendung einer Ausgleichskurve, eine entsprechende Vorrichtung und ein entsprechendes Computerprogramm.

Manche derzeitige und vor allem zukünftige Fahrerassistenzsysteme wie Kollisionswarner oder fortgeschrittene Navigationssysteme benötigen relativ genaue Informationen über die Geometrie von Straßenverläufen und insbesondere Kreuzungen und Fahrspurverläufen. Gerade bei sicherheitskritischen Fahrerassistenzsystemen ist die Genauigkeit und Aktualität dieser Informationen von großer Bedeutung.

Die Bereitstellung dieser Information mithilfe eines Fahrzeuges, das mit einem Präzisions-Positionierungssystem, beispielsweise einem besonders genauen GPS Empfänger, ausgestattet ist, ist sehr aufwändig in Anbetracht der großen Anzahl an Kreuzungen.

Viele der heutigen Fahrzeuge verfügen über einen einfachen GPS Empfänger. Diese GPS Empfänger liefern jedoch nur vergleichsweise verrauschte Messungen und keine ausreichende Genauigkeit, um aus den Aufzeichnungen eines Fahrtverlaufes auf den genauen Verlauf einer Fahrspur zu schließen.

Das Dokument WO 2007/010317 A1 offenbart ein Verfahren zum Modellieren eines Straßennetzwerkgraphen, in dem Informationsdaten von einer Vielzahl von Fahrzeugen empfangen werden, wobei diese Informationsdaten zumindest Positionsdaten umfassen. Das dort offenbart Verfahren umfasst ferner das Modellieren des Straßennetzwerkgraphen gemäß den empfangenen Daten.

In der Veröffentlichung "Exploiting arc splines for digital maps", 14th International Conference on Intelligent Transportation Systems (ITSC), 2011 von A. Schindler et al. werden sogenannte "arc splines" dazu verwendet Fahrspuren zu repräsentieren. Jedoch werden für das dort vorgestellte Verfahren sortierte und genaue Positionsbestimmungen benötigt, wie sie von einfachen GPS Empfängern nicht zuverlässig bereitgestellt werden.

Im Bereich der Bildverarbeitung ist die Berechnung einer "B-Spline" Kurve zur Annäherung einer verrauschten Punktewolke bekannt und zum Beispiel in der Veröffentlichung "Fitting b-spline curves to point clouds by squared distance minimization", ACM Transactions on graphics, 2004 von W. Wang et al. beschreiben.

Die der Erfindung zugrundeliegende Aufgabe besteht darin, einen Fahrspurverlauf zu bestimmen, aufbauend auf einer Vielzahl von verrauschten aufgezeichneten Fahrtverläufen für einen Streckenabschnitt.

Die Aufgabe der Erfindung wird durch die unabhängigen Patentansprüche gelöst. Vorteilhafte Weiterbildungen sind in den abhängigen Ansprüchen definiert.

In einem Aspekt umfasst ein Verfahren zum Bestimmen eines Fahrspurverlaufes einer Fahrspur mithilfe einer Vielzahl von aufgezeichneten Fahrtverläufen unter Verwendung einer Ausgleichskurve, wobei jeder Fahrtverlauf der Vielzahl von Fahrtverläufen einzelne Positionsangaben des Fahrzeugs in der Reihenfolge des Passierens während der jeweiligen Fahrt umfasst, Folgendes: Auswählen eines Fahrtverlaufes aus der Vielzahl von Fahrtverläufen; Bestimmen der Anzahl von Kontrollpunkten für die Ausgleichskurve basierend auf dem ausgewählten Fahrtver-lauf; Bestimmen einer initialen Ausgleichskurve basierend auf der Anzahl der Kontrollpunkte und dem ausgewählten Fahrtverlauf aus der Vielzahl der Fahrtverläufe; Wiederholen des folgenden Schritts bis ein Abbruchkriterium erfüllt ist: Bestimmen einer neuen Ausgleichskurve unter Verwendung der vorhergehend bestimmten Ausgleichskurve und einzelnen Positionsangaben der Fahrtverläufe der Vielzahl von Fahrtverläufen, wobei das Bestimmen der neuen Ausgleichskurve unabhängig von der Reihenfolge der Positionsangaben in einem der jeweiligen Fahrtverläufe und unabhängig davon ist, dass eine verwendete Positionsbestimmung einem Fahrtverlauf aus der Vielzahl der Fahrtverläufe zugeordnet ist; Ausgeben der zuletzt bestimmten Ausgleichskurve als Fahrspurverlauf. Das Abbruchkriterium kann eine vorgegebene Anzahl an Wiederholungen sein, z.B. 3 oder 4, oder die Vorgabe eines minimalen Unterschiedes zwischen den jeweils berechneten Ausgleichskurven. Ein Verlauf einer Fahrspur oder einer Fahrt eines Fahrzeugs beschreibt die räumliche Anordnung, gegebenenfalls nur in zwei Dimensionen, der Fahrspur oder der Orte, die ein Fahrzeug eingenommen hat.

Das Verfahren umfasst ferner die folgenden Schritte, die vor allen anderen Schritten ausgeführt werden: Bestimmen derjenigen Fahrtverläufe aus der Vielzahl von Fahrtverläufen, die derselben Fahrspur folgen; Reduzieren der Vielzahl von Fahrtverläufen auf die bestimmten Fahrtverläufe, so dass nur noch diese in der Vielzahl von Fahrtverläufen umfasst sind. Gerade die Betrachtung von Kreuzungen und den dortigen Fahrspurverläufen ist für Sicherheits-Fahrerassistenzsysteme relevant. Gleichzeitig werden die Fahrzeuge an Kreuzungen unterschiedliche Manöver wählen, z.B, links oder rechts abbiegen oder geradeausfahren. Eine Bestimmung eines Fahrspurverlaufes auf der Grundlage von aufgezeichneten Fahrtverläufen macht nur insofern Sinn, als alle betrachteten Fahrtverläufe Fahrten repräsentieren, die dasselbe Manöver durchgeführt haben. Diese Fahrten werden also isoliert betrachtet.

Mithilfe des Verfahrens wird es ermöglicht, aus einer Vielzahl von Fahrtverläufen mit verrauschten Positionsangaben, deren einzelne Genauigkeit zur Erstellung von genauen Fahrspurverläufen unzureichend wäre, einen genaueren Verlauf einer Fahrspur automatisch zu ermitteln. Dazu werden mehrere Fahrtverläufe gemeinsam betrachtet und so die Ungenauigkeiten aufgrund des Rauschens verringert. Dabei spielt es keine Rolle ob das Rauschen durch die Positionsmessung oder durch variierendes Fahrerverhalten verursacht wird. Auf diese Weise können aus Aufzeichnungen von Fahrzeugen mit einfachen GPS Empfängern genauere Fahrspurverläufe erzeugt werden, als von den einfachen GPS Empfängern aufgezeichnet wurden. Ebenso kann aus diversen Überfahrten von verschiedenen Fahrern ein für den Durchschnittsfahrer repräsentativer Fahrspurverlauf ermittelt werden.

Ein Vorteil der Bestimmung von Fahrspurverläufen mithilfe von tatsächlich gefahrenen Fahrtverläufen ist, dass die tatsächlichen Fahrtverläufe für Fahrerassistenzsysteme relevanter sein können als der Verlauf von Fahrspuren, der aufgrund hochgenauer Messungen bestimmt wurde. Dies deshalb, da Fahrer nicht immer in der exakten Mitte einer Fahrspur fahren, beispielsweise in Kurven. Fahrerassistenzsysteme können dann aufbauend auf den tatsächlich gefahrenen Fahrspurverläufen mögliche Kollisionspunkte besser bestimmen und auch die Fahrerabsicht besser vorhersagen, soweit diese Vorhersage auf Positionsauswertungen im Bezug auf Fahrspuren basiert.

Das Verfahren eignet sich zur Bestimmung des Fahrspurverlaufes sowohl an Kreuzungen, als auch für Streckenabschnitte ohne Kreuzungen. Auf diesen Streckenabschnitten kann beispielsweise der Verlauf von Kurven von Interesse sein. Typischerweise wird der Verlauf der Fahrspur in der Ebene betrachtet; an komplexen Kreuzungen mit Überführungen können die Fahrspuren auch in allen drei räumlichen Dimensionen bestimmt werden. Das Verfahren ist insbesondere dann vorteilhaft, wenn jede Fahrbahn nur eine Fahrspur in eine Richtung aufweist und/oder wenn für jede Manövermöglichkeit (Durchfahrt, Links-/Rechts-Abbiegen) nur eine Fahrspur zur Verfügung steht. Im dem Fall, dass eine Fahrbahn zwei oder mehrere parallele Fahrspuren für dieselbe Manövermöglichkeit umfasst, werden die Positionsangaben der Fahrzeuge Häufungen in der Mitte jeder Fahrspur aufweisen. Anhand dieser Häufungen können die Fahrtverläufe, die auf parallelen Fahrspuren verlaufen, unterschieden werden.

Das Verfahren wird bevorzugt in einem zentralen stationären Server ausgeführt, der zuvor die Vielzahl von Fahrtverläufen von Fahrzeugen mit einfachen GPS Empfängern empfangen hat. Die einzelnen Positionsangaben werden unabhängig von der Zugehörigkeit zu Fahrtverläufen mit dem Index k fortlaufend nummeriert und als $M_k$ bezeichnet.

Vorteilhafterweise wird eine B-spline Kurve P(t) als Ausgleichskurve verwendet. Diese Parametrierung des Fahrspurverlaufs bietet den Vorteil, dass sie neben dem räumlichen Verlauf der Spur auch einen abschnittweise konstanten Krümmungsverlauf beschreibt, der von Vorteil ist für die Anwendung in Assistenzsystemen. Eine B-spline Kurve wird durch die folgende Formel beschrieben:

$$P(t) = \sum_{i=1}^{L} P_i B_i^p(t)$$

Wobei $P_i$ Kontrollpunkte sind und $B_i^p$ die B-spline Grundfunktion $B_i$ einer bestimmten Ordnung p ist, welche mit der in "A Practical Guide to Splines", Applied Mathematical Sciences, Springer, 2001 von C. De Boor angegebenen Rekursion berechnet werden kann. In dem vorliegende Verfahren beträgt die Ordnung p vorteilhafterweise 3, so dass kubische b-spline Kurve entsteht. Die Variable t gibt die Entfernung auf der B-spline Kurve von einem Nullpunkt auf der Kurve an. Die Verwendung von B-Spline Kurven als Ausgleichskurven hat den Vorteil, dass nur eine relativ geringe Anzahl an Parametern zur Beschreibung der Kurve nötig ist, insbesondere im Vergleich zu einer Approximation des Kurvenverlaufs durch Aneinanderreihen von Geradenabschnitten. Diese Art der Beschreibung der Ausgleichskurve, ist deshalb besonders gut geeignet zur drahtlosen Übertragung und effizienten Nutzung von Übertragungsbandbreite.

Im Vergleich zum bestehenden Datenformat von simTD D21.4 - Spezifikation der Kommunikationsprotokolle, http:/fwww.simtd.de, endet die Beschreibung der Fahrspuren nicht an der Stop-Linie einer Kreuzung. Mithilfe der kontinuierlichen Beschreibung der Fahrspuren durch B-Splines wird die Vorhersage von Fahrtverläufen in dem unstrukturierten inneren Bereich von Kreuzungen verbessert, gerade im Fall von komplexen innerstädtischen Kreuzungen. Die in simTD D21.4 - Spezifikation der Kommunikationsprotokolle vorgenommenen Spezifikationen können durch die Beschreibung von B-Splines oder ähnlichen Beschreibungen ergänzt werden, die Fahrspuren ohne Unterbrechungen beschreiben.

Die Positionsangaben sind typischerweise mit Hilfe eines oder mehrerer Satellitennavigationssystems bestimmt. Hierfür kommen insbesondere GPS, Galileo und/oder GLONASS in Frage.

In einer Weiterbildung umfasst das Bestimmen derjenigen Fahrtverläufe aus der Vielzahl von Fahrtverläufen, die derselben Fahrspur folgen, Folgendes für jeden Fahrtverlauf: Bestimmen, ob eine Positionsangabe des jeweiligen Fahrtverlaufes in einem ersten vordefinierten Positionsbereich liegt und eine Positionsangabe desselben Fahrtverlaufes in einem zweiten vordefinierten Positionsbereich liegt. So kann zum Beispiel an einer Kreuzung ein erster vordefinierter Positionsbereich auf einen Bereich in oder vor der Kreuzung gelegt werden, in dem Fahrzeuge in die Kreuzung einfahren, und ein zweiter vordefinierter Positionsbereich auf einen Bereich in oder vor der Kreuzung gelegt werden, durch den Fahrzeuge beim Verlassen der Kreuzung fahren. Auf diese Weise können die verschiedenen Durchquerungsmöglichkeiten der Kreuzung (Durchfahrt, links/rechts abbiegen) auseinander gehalten werden.

In einer Weiterbildung umfasst das Bestimmen der Anzahl der Kontrollpunkte für die Ausgleichskurve Folgendes: Teilen der Länge des zufällig ausgewählten Fahrtverlaufes durch eine vorgegebene Divisorlänge; Wählen der Anzahl der Kontrollpunkte basierend auf dem Ergebnis des Teilens. Eine B-spline Ausgleichskurve P benötigt zur Parametrisierung Kontrollpunkte $P_i$. Hierzu ist zunächst die Anzahl der Kontrollpunkte zu bestimmen. Das vorliegende Verfahren schlägt hierzu vor, die Länge des zufällig ausgewählten Fahrtverlaufes durch eine Divisorlänge $k_{igl}$ zu teilen. Die Divisorlänge $k_{igl}$ kann frei bestimmt werden, und Versuche der Praxis haben gezeigt, dass eine Divisorlänge von $k_{igl} = 15m$ gute Resultate liefert. Vorteilhafterweise liegt die Divisorlänge $k_{igl}$ im Bereich von 2m bis 35m. Das Ergebnis der Division wird vorteilhafterweise noch auf die nächste ganze größere oder kleinere Zahl gerundet.

In einer Fortbildung umfasst das Bestimmen der neuen Ausgleichskurve ferner: Für jede verwendete Positionsangabe: Bestimmen des Punktes auf der vorhergehend bestimmten Ausgleichskurve, der die kürzeste Distanz zu der jeweiligen Positionsangabe aufweist; Bestimmen dieses Punktes als Fußpunkt für die jeweilige Positionsangabe. Die Fußpunkte können in der oben gegebenen Formel für die Definition einer B-spline durch die Variable t angegeben werden. Zu jeder verwendeten Positionsangabe $M_k$ wird ein $t_k$ bestimmt. Die Bestimmung der jeweiligen Fußpunkte dient als Grundlage für die Optimierung der Ausgleichskurve, also der Bestimmung einer neuen Ausgleichskurve basierend auf der vorhergehenden.

In einer vorteilhaften Weiterbildung umfasst das Bestimmen der neuen Ausgleichskurve die Multiplikation von Matrizen, von denen mindestens eine Matrix die verwendeten einzelnen Positionsangaben umfasst. Die Matrix mit den verwendeten einzelnen Positionsangaben kann auch ein Vektor sein. Vektoren werden hierin auch als Matrizen verstanden. Die Multiplikation von Matrizen ist eine Rechenoperation, die auf Rechnern sehr effizient und schnell ausgeführt werden kann. Hierin liegt ein Vorteil des vorgestellten Verfahrens. Die Berechnung der Ausgleichskurven geschieht auf rechentechnisch einfache Art. Die Bestimmung der Ausgleichskurve kann somit schnell und kostengünstig durchgeführt werden. Dies vereinfacht auch eine kontinuierliche Aktualisierung der bestimmten Fahrspurverläufe. Baustellen oder ähnliche kurzfristige Verlagerungen der Fahrspurverläufe können so schnell erkannt werden und Fahrerassistenzsystemen zur Verfügung gestellt werden.

Die gewonnenen Fahrspurverläufe können für ein Fahrerassistenzsystem als Grundlage dazu dienen, zu bestimmen, ob eine Kollision eines Fahrzeugs mit einem anderen Verkehrsteilnehmer droht; diese erkannte Gefahr kann als Warnung angezeigt werden. Ein Beispiel für ein solches Fahrerassistenzsystems ist ein Kreuzungsassistent zum Vermeiden von Kollisionen an Kreuzungen.

In einem anderen Aspekt umfasst eine Vorrichtung elektronische Rechen- und Speichermittel, wobei die Vorrichtung dazu eingerichtet ist eines der oben vorgestellten Verfahren auszuführen, wobei die Vorrichtung dazu eingerichtet ist, dass die Speichermittel zumindest die verwendeten einzelnen Positionsangaben und Parameter einer Ausgleichskurve speichern. Die Rechenmittel können in einem Computer umfasst sein und ein Mikroprozessor, ein Mikrocontroller oder dedizierte Schaltkreise sein. Bei den Speichermitteln kann es sich um aus dem Stand der Technik bekannte Speicher aus der Computertechnologie handeln.

Ferner ist ein in einem anderen Aspekt ein Computerprogramm dazu ausgebildet, bei seiner Ausführung einen Computer zur Ausführung eines der obenstehenden Verfahrens zu veranlassen.

KURZE BESCHREIBUNG DER ZEICHNUNGEN

Fig. 1 zeigt schematisch das Vorgehen bei der Auswahl von Fahrspurverläufen gemäß einem Ausführungsbeispiel.

Fig. 2 zeigt schematisch das Bestimmen einer initialen Ausgleichskurve gemäß einem Ausführungsbeispiel.

Fig. 3 zeigt schematisch die Bestimmung der Ausgleichskurve, die als Fahrspurverlauf ausgegeben wird, gemäß einem Ausführungsbeispiel.

Fig. 4 zeigt schematisch die Ergebnisse der Bestimmung von Fahrspurverläufen für eine Kreuzung gemäß einem Ausführungsbeispiel.

Fig. 5 zeigt schematisch eine beispielhafte Häufigkeitsverteilung von Abständen zwischen Positionsangaben und Fußpunkten für den Fall von zwei parallelen Fahrspuren.

Gleiche Bezugszeichen beziehen sich auf sich entsprechende Elemente über die Figuren hinweg.

DETAILLIERTE BESCHREIBUNG DER AUSFÜHRUNGSBEISPIELE

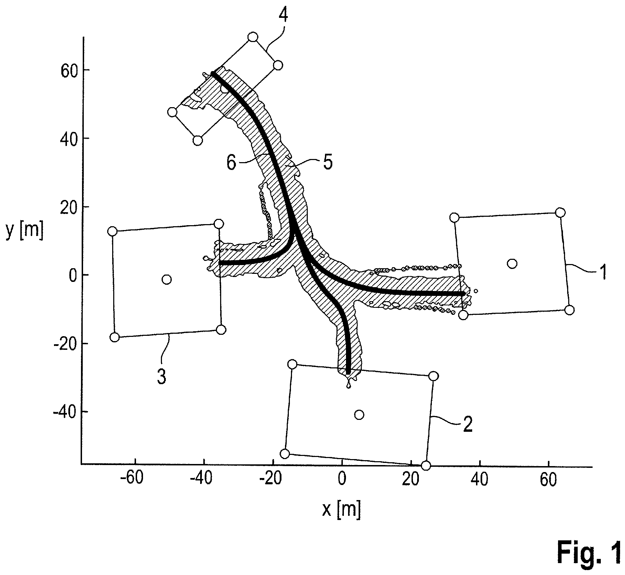

Fig. 1 zeigt die aufgezeichneten und an einen zentralen Server im Backend gesendeten Fahrtverläufen 5 von Fahrzeugen an einer Kreuzung. Dargestellt und berücksichtigt werden hier nur Fahrtverläufe 5 von Fahrten, die auf der im Sinn der Fig. 1 nördlichen Zufahrt der Kreuzung beginnen. Mit Bezugsziffer 6 sind, als Orientierung, die tatsächlichen Fahrspurverläufe eingezeichnet. Jeder Fahrtverlauf besteht aus in der Reihenfolge des Durchfahrens angeordneten Positionsangaben. Die Positionsangaben sind in Fig. 1 als graue Punkte dargestellt. Zu einem Fahrtverlauf gehörende Positionsangaben sind durch eine dünne Linie verbunden. In Fig. 1 ist beispielsweise ein einzelner Fahrtverlauf in der Nähe des Bereiches 1 zwischen ungefähr x = 5m bis 40m und y = 1 m bis 5m sichtbar. Die meisten der in Fig. 1 dargestellten Fahrtverläufe überdecken sich derart, dass nur eine graue Fläche sichtbar ist.

Zur Bestimmung eines Fahrspurverlaufes werden zunächst die einzelnen Fahrtverläufe nach dem ausgeführten Fahrmanöver sortiert. Dazu werden Bereiche 1 bis 4 bestimmt, die an der Zufahrt zur Kreuzung und an einer der Ausfahrten der Kreuzung angeordnet werden. Zur Bestimmung der Fahrspur zum Rechts-Abbiegen werden all diejenigen Fahrtverläufe ausgewählt, die jeweils mindestens eine Positionsangabe umfassen, die im Positionsbereich 4 liegt, und jeweils mindestens eine Positionsangabe umfassen, die im Positionsbereich 3 liegt. Die so ausgewählten Fahrtverläufe bilden die Vielzahl an Fahrtverläufen, für die ein Fahrspurverlauf bestimmt wird. Dieser Fahrspurverlauf gibt den Verlauf der Fahrspur zum Rechts-Abbiegen an.

Ebenso kann für die Fahrtverläufe, die jeweils mindestens eine Positionsangabe im Positionsbereich 4 umfassen und jeweils mindestens eine Positionsangabe im Positionsbereich 2 umfassen, die Fahrspur bestimmt werden. Diese gibt dann die Fahrspur zur Durchfahrt durch die Kreuzung an.

Zur Bestimmung des Fahrspurverlaufes zum Links-Abbiegen werden alle diejenigen Fahrtverläufe ausgewählt, die mindestens eine Positionsangabe im Positionsbereich 4 und mindestens eine Positionsangabe im Positionsbereich 1 umfassen.

Die Positionsbereiche 1 bis 4 können automatisch mithilfe bereits vorhandener Karten erzeugt werden, oder durch manuelle Bearbeitung aufbauend auf vorhandenen Karten erstellt werden. Die Positionsbereiche 1 bis 4 sind relativ grobe Angaben, wo Fahrspurverläufe beginnen und enden können.

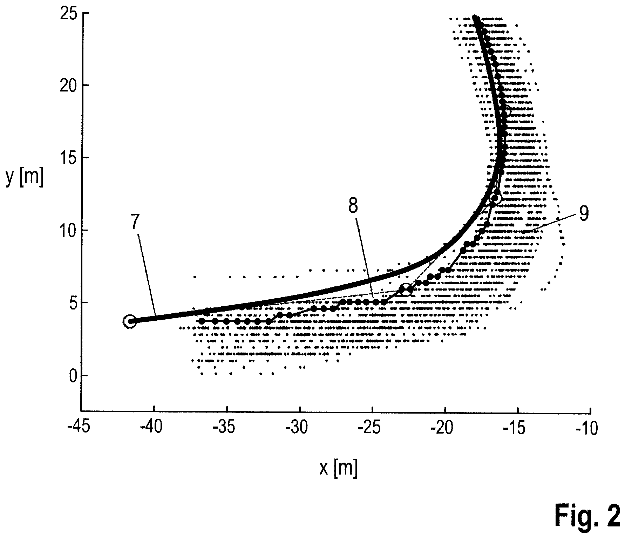

Fig. 2 zeigt vergrößert einen Ausschnitt von Fig. 1, der sich aufgrund der x und y Angaben bestimmen lässt. Fig. 2 zeigt schematisch das Bestimmen einer initialen Ausgleichskurve gemäß einem Ausführungsbeispiel, wozu zunächst das Bestimmen der Anzahl der Kontrollpunkte durchgeführt wird. Diese beiden Schritte bauen auf einem ausgewählten Fahrtverlauf 8 auf. Dieser Fahrtverlauf kann zufällig gewählt werden, gegebenenfalls unter der Einschränkung, dass er plausible Positionsangaben enthält, also Positionsangaben, die keinen zu starken Zick-Zack Kurs repräsentieren oder sonstige Eigenschaften aufweisen, die auf eine stark verrauschte Messung hindeuten. Mit Bezugsziffer 9 werden diejenigen Positionsangaben bezeichnet, die innerhalb des betrachteten Ausschnitts der Fig. 2 liegen.

Als nächstes wird die Länge $l_{ig}$ dieses ausgewählten Fahrtverlaufes bestimmt. Diese Länge $l_{ig}$ wird dann durch die Divisorlänge $k_{igl}$ geteilt und nach unten auf die größte ganze Zahl abgerundet, um die Anzahl der Kontrollpunkte L zu bestimmen:

$$L = floor\left( \frac{l_{ig}}{k_{igl}} \right)$$

.

Von den Positionsangaben des ausgewählten Fahrtverlaufes werden diejenigen ausgewählt, für die auch eine Fahrzeuggeschwindigkeit oberhalb eines Schwellwertes beispielsweise 3 km/h aufgezeichnet wurde. Die Menge der ausgewählten Positionsangaben wird mit $M_{ig}$ bezeichnet. Hierin wird davon ausgegangen, dass für die Positionsangaben stets auch die Fahrzeuggeschwindigkeit am Ort der Positionsangabe aufgezeichnet wurde. Diese Auswahl stellt sicher, dass die Positionsangaben nicht übereinander liegen.

Schließlich wird eine initiale B-spline Ausgleichskurve $P_{ig}(t)$ dritter Ordnung erstellt. Dazu werden zunächst L Kontrollpunkte $B_i$ erstellt. Die Werte der Kontrollpunkte $B_i$ werden den Werten einer Kurve entnommen, die sich durch einheitliche Auswertung, z.B. Interpolation, zwischen den Positionsangaben $M_{ig}$ ergibt. Die Werte werden dabei im Abstand $k_{igl}$ auf der Kurve entnommen. Zusätzlich wird an beiden Enden der Kurve ein Endpunkt ein Ursprungspunkt (in Fig. 2 ist einer von ihnen mit einem Kreis bei ca. x = -42,5m und y= 4,5 m gekennzeichnet) als zusätzlicher Kontrollpunkt etwas vor dem ausgewählten Fahrtverlauf hinzugenommen, so dass dieser aus den Messdaten hinausragt. Der Ursprungspunkt kann durch Extrapolation des ausgewählten Fahrtverlaufes gewonnen werden. Die B-Spline Ausgleichskurve wird gemäß der in "A Practical Guide to Splines", Applied Mathematical Sciences, Springer, 2001 von C. De Boor angegebenen Rekursion bestimmt, die hier verkürzt aber den Fachmann zur Ausführung befähigend wiedergegeben ist:

$$P(t) = \sum_{i=1}^{L} P_i B_i^p(t)$$

Wobei:

u ein gleichmäßig verteilter Knotenvektor mit m=L+1 Elementen ist

$$u_0 = 0 , u_m = 1, u_{i+1} - u_i = \frac{1}{L}$$

$$B_i^0(t) = \left\{ \begin{array}{l} 1, wenn\ u_i \leq t \leq u_{i+1} \\ 0, sonst \end{array} \right.$$

$$B_i^p(t) = \frac{t - u_i}{u_{i+p} - u_i} B_i^{p-1}(t) + \frac{u_{i+p+a} - t}{u_{i+p+1} - u_{i+1}} B_{i+1}^{p-1}(t)$$

Auf diese Weise wird das finale P(t) rekursiv berechnet, wobei hier die Ausgleichsfunktion für p = 3 errechnet wird. t ist die Laufvariable, welche proportional zur Länge entlang der Kurve ist und L die Anzahl der Kontrollpunkte, wie oben schon definiert. Mit der Bezugsziffer 7 wird die bestimmte initiale Ausgleichskurve bezeichnet.

Wie in Fig. 2 ersichtlich werden die Positionsangaben hier als einzelne Punkte behandelt, die nicht in der Reihenfolge des Durchfahrens aufgelistet und auch nicht Fahrtverläufen zugeordnet sind. Sie stellen im Wesentlichen eine ungeordnete Punktewolke dar. Dies birgt den Vorteil, dass die Positionsangaben für die folgende Verarbeitung effizient gespeichert werden können.

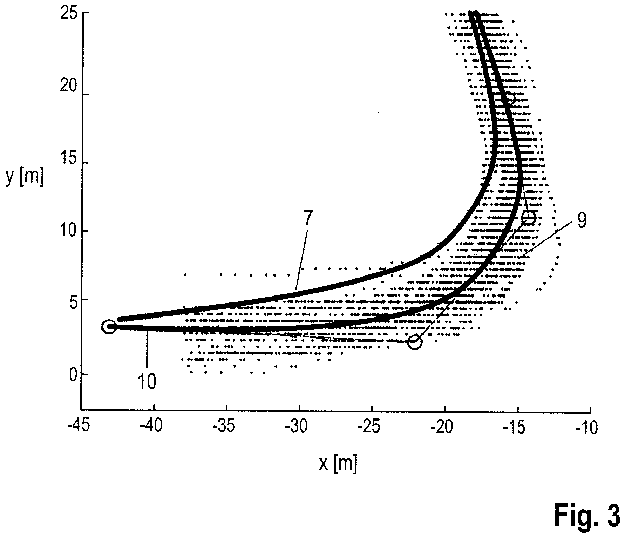

Als nächster Schritt folgt die Optimierung der Ausgleichskurve 9. Fig. 3 stellt diesbezüglich das Ergebnis 10 der zum dritten Mal neu bestimmten Ausgleichskurve 10 dar, die auch als Fahrspurverlauf ausgegeben wird.

Bei jeder Neuberechnung werden die folgenden Schritte ausgeführt.

Zunächst wird für jede Positionsbestimmung $M_k$ ein Fußpunkt $P(t_k)$ auf der zuvor bestimmten Ausgleichskurve (ggf. der initialen Ausgieichskurve) bestimmt. Dazu wird dasjenige $t_k$ gesucht, das den Betrag der Distanz zwischen $M_k$ und P(t) (für alle t) minimiert, also $\| P(t_k) - M_k \| = min$, für alle t. Zu jedem $M_k$ wird ein $t_k$ bestimmt. Idealerweise ist der Betrag der Distanz gleich Null.

Idealerweise gilt somit für jedes $M_k$:

$$P_1 B_1(t_k) + \ldots + P_n B_n(t_k) - M_k = 0$$

Wobei n=L gilt.

Die Ausgleichskurve wird dahingehend neu bestimmt bzw. optimiert, dass neue Kontrollpunkte $P_i$ gefunden werden sollen. Basierend auf der zuvor aufgestellten Gleichung lässt sich somit folgendes Matrix-Gleichungssystem aufstellen, aus dem die Kontrollpunkte $P_i$ gefunden werden sollen:

$$\begin{bmatrix} B_1(t_1) & \cdots & B_n(t_1) \\ & \vdots & \\ B_1(t_m) & \cdots & B_n(t_m) \end{bmatrix} \begin{bmatrix} P_1 \\ \vdots \\ P_n \end{bmatrix} = \begin{bmatrix} M_1 \\ \vdots \\ M_m \end{bmatrix}$$

$$\underbrace{\phantom{xxx}}_{\mathbf{B}} \quad \underbrace{\phantom{x}}_{\mathbf{P}} \quad \underbrace{\phantom{x}}_{\mathbf{M}}$$

Wobei m hier die Gesamtanzahl an Positionsangaben angibt. Dieses lineare Gleichungssystem ist bei einer hinreichend großen Anzahl an Positionsangaben überbestimmt. Da durch das vorliegende Verfahren ein Fahrspurverlauf durch Zusammenfassen einer großen Anzahl an verrauschten Positionsbestimmungen bestimmt werden soll, wird typischerweise eine hinreichend große Anzahl an Positionsbestimmungen vorhanden sein. Falls nicht ist die Vielzahl an Fahrspurverläufen um weitere Fahrspurverläufe zu erhöhen.

Aufgrund der Überbestimmtheit und der unabhängigen Spalten der Matrix **B** ist **B**$^\mathsf{T}$**B** stets invertierbar. Somit kann das obige Gleichungssystem nach **P** aufgelöst werden:

$$P = \left( B^T B \right)^{-1} B^T M$$

Die Ermittlung der optimierten Kontrollpunkte P mit Hilfe eines linearen Gleichungssystems ermöglicht somit vorteilhafterweise die Anwendung von recheneffizienten Lösungsalgorithmen. Die so gefundenen neuen Kontrollpunkte **P** definieren die neu bestimmte B-Spline Ausgleichskurve.

Die jeweils neu bestimmten Ausgleichskurven konvergieren schnell und im vorliegenden Ausführungsbeispiel wird nach einer dreimaligen Neu-Bestimmung der Ausgleichskurve P abgebrochen. Die zuletzt bestimmte Ausgleichskurve wird als Fahrspurverlauf ausgegeben.

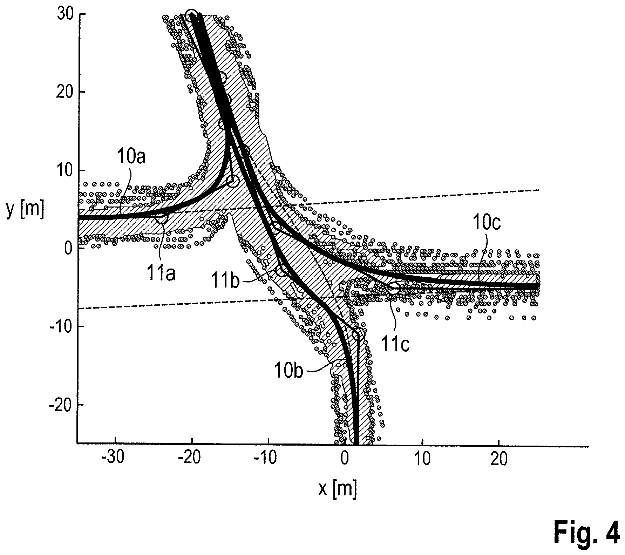

Fig. 4 zeigt schematisch die Ergebnisse der Bestimmung von Fahrspurverläufen 10a bis 10c für eine Kreuzung gemäß einem Ausführungsbeispiel. Dieses Beispiel bezieht sich auf die schon in Fig. 1 vorgestellte Kreuzungssituation. Fig. 4 zeigt die Bestimmung der Fahrspurverläufe nur von "oben" aus, wobei die Kreuzungszufahrt von oben aus in der Realität einspurig ist. Dies wird auch dadurch ersichtlich, dass sich die Fahrspurverläufe 10a bis 10c in der Kreuzungszufahrt überschneiden.

Ferner sind mit einem hochpräzisen GPS System aufgenommene Fahrten durch die Kreuzung mit den Bezugszeichen 11a bis 11c eingezeichnet. Generell zeigt sich eine gute Übereinstimmung zwischen den Kurven. Bei der geraden Durchfahrt zeigen sich größere Abweichungen aufgrund der speziellen gewählten Route bei der Durchfahrt des Fahrzeugs mit dem hochpräzisen GPS System.

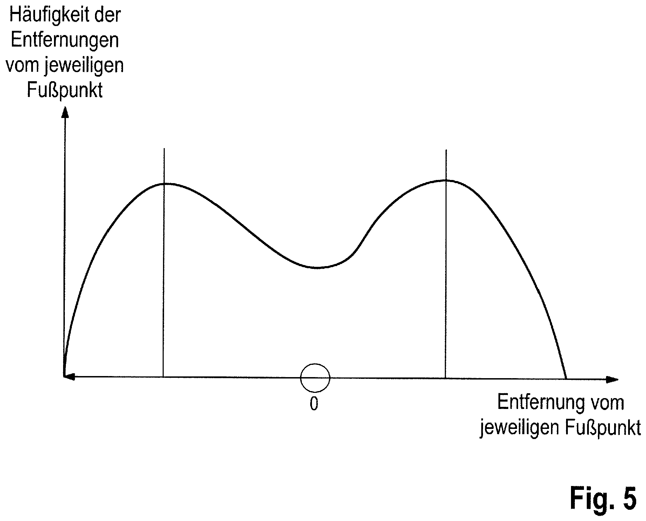

Im dem Fall, dass eine Fahrbahn zwei oder mehrere parallele Fahrspuren für dieselbe Manövermöglichkeit umfasst, werden die Positionsangaben der Fahrzeuge Häufungen in der Mitte jeder Fahrspur aufweisen. Anhand dieser Häufungen können die Fahrtverläufen, die auf parallelen Fahrspuren verlaufen, unterschieden werden. An die Bestimmung der Ausgleichskurve kann sich zum Aufdecken von parallelen Fahrspuren für dieselbe Manövermöglichkeü eine Untersuchung an das vorgestellte Verfahren anschließen. Dazu werden zumindest für gewisse Abschnitte (beispielsweise den Zufahrtsabschnitt der Kreuzung) die Abstände der Positionsbestimmungen zu ihren dann neu zu bestimmenden Fußpunkten bestimmt und als Häufigkeitsverteilung in Abhängigkeit vom Abstand von der Ausgleichskurve dargestellt. Zeigen sich in diesem Schnitt zwei oder mehr Maxima in einem typischen Abstand von Fahrspurmitten, kann auf parallele Fahrspuren für dieselbe Manövermöglichkeit geschlossen werden. Die ermittelte Ausgleichskurve kann dann durch Ausgleichskurven für jede Fahrspur ersetzt werden, die jeweils gegenüber der gemeinsamen Ausgleichskurve angepasst werden, z.B. durch zur gemeinsamen Ausgleichskurve punktweisen senkrechten Verschiebung um die Hälfte einer typischen Fahrspurbreite. Fig. 5 zeigt schematisch eine beispielhafte Häufigkeitsverteilung von Abständen von Fußpunkten. Die Häufigkeitsverteilungen sind in Entfernungsbereichen gruppiert, die Darstellung in Fig. 5 ist geglättet. Durch den Kreis auf der Entfernungs-Achse ist die zuletzt bestimmte Ausgleichskurve bezeichnet, durch die zwei senkrechten Linien die Maxima der Häufigkeitsverteilungen, die hier um die typische Distanz zwischen den Mitten von zwei parallelen Fahrspuren getrennt sind. Aus der Auswertung der in Fig. 5 gezeigten Häufigkeitsverteilung kann auf das Bestehen von zwei parallelen Fahrspuren für dasselbe Fahrmanöver geschlossen werden.

**Patentansprüche**

1. Verfahren zum Bestimmen des Verlaufes einer Fahrspur mithilfe einer Vielzahl von aufgezeichneten Fahrtverläufen (5) von Fahrzeugen unter Verwendung einer Ausgleichskurve,

   wobei jeder Fahrtverlauf der Vielzahl von Fahrtverläufen (5) einzelne Positionsangaben in der Reihenfolge des Passierens während der jeweiligen Fahrt umfasst;

   wobei das Verfahren umfasst:

   Bestimmen derjenigen Fahrtverläufe aus der Vielzahl von Fahrtverläufen, die derselben Fahrspur folgen und/oder dasselbe Fahrmanöver repräsentieren;

   Reduzieren der Vielzahl von Fahrtverläufen auf die bestimmten Fahrtverläufe, so dass nur noch diese in der Vielzahl von Fahrtverläufen umfasst sind.

   Auswählen eines Fahrtverlaufes aus der Vielzahl von Fahrtverläufen;

   Bestimmen der Anzahl von Kontrollpunkten für die Ausgleichskurve basierend auf dem ausgewählten Fahrtverlauf;

   Bestimmen einer initialen Ausgleichskurve (7) basierend auf der Anzahl der Kontrollpunkte und dem ausgewählten Fahrtverlauf aus der Vielzahl der Fahrtverläufe;

   Wiederholen des folgenden Schritts bis ein Abbruchkriterium erfüllt ist:

   Bestimmen einer neuen Ausgleichskurve (10) unter Verwendung der vorhergehend bestimmten Ausgleichskurve (9) und einzelnen Positionsangaben der Fahrtverläufe der Vielzahl von Fahrtverläufen,

   wobei das Bestimmen der neuen Ausgleichskurve unabhängig von der Reihenfolge der Positionsangaben in einem der jeweiligen Fahrtverläufe und unabhängig davon ist, dass eine verwendete Positionsangabe einem Fahrtverlauf aus der Vielzahl der Fahrtverläufe zugeordnet ist;

   Ausgeben der zuletzt bestimmten Ausgleichskurve als Fahrspurverlauf.

2. Verfahren nach Anspruch 1, wobei das Bestimmen derjenigen Fahrtverläufe aus der Vielzahl von Fahrtverläufen (5), die derselben Fahrtspur folgen, Folgendes für jeden Fahrtverlauf umfasst:

   Bestimmen, ob eine Positionsangabe des jeweiligen Fahrtverlaufes in einem ersten vordefinierten Positionsbereich liegt und eine Positionsangabe desselben jeweiligen Fahrtverlaufes in einem zweiten vordefinierten Positionsbereich liegt.

3. Verfahren nach einem der vorhergehenden Ansprüche, wobei das Bestimmen der Anzahl der Kontrollpunkte für die Ausgleichskurve umfasst:

   Teilen der Länge des zufällig ausgewählten Fahrtverlaufes durch eine vorgegebene Divisorlänge;

   Wählen der Anzahl der Kontrollpunkte basierend auf dem Ergebnis des Teilens.

4. Verfahren nach einem der vorhergehenden Ansprüche, wobei das Bestimmen der neuen Ausgleichskurve die Multiplikation von Matrizen umfasst, von denen mindestens eine Matrix die verwendeten einzelnen Positionsangaben umfasst.

5. Verfahren nach einem der vorhergehenden Ansprüche, ferner umfassend:

   Bestimmen, ob eine Kollision eines Fahrzeugs mit einem anderen Verkehrsteilnehmer droht unter Verwendung der ausgegebenen Ausgleichskurve;

   Anzeigen einer Warnung auf die bevorstehende Kollision.

6. Verfahren nach einem der vorhergehenden Ansprüche, wobei die Positionsangaben insbesondere mithilfe eines Satellitennavigationssystems bestimmt wurden.

7. Verfahren nach einem der vorhergehenden Ansprüche, ferner umfassend die folgenden Schritte, die nach dem letzten Bestimmen der neuen Ausgleichskurve ausgeführt werden:

   Für einen Abschnitt der Ausgleichskurve, wobei der Abschnitt insbesondere die ganze Ausgleichskurve umfasst:

Für die verwendeten Positionsangaben im Abschnitt der Ausgleichskurve: Bestimmen des jeweils kürzesten Abstandes zwischen der Positionsangabe und der Ausgleichskurve;
Bestimmen der Häufigkeitsverteilung in Abhängigkeit des Abstandes;
Bestimmen, ob die Häufigkeitsverteilung darauf hindeutet, dass mindestens zwei parallele Fahrspuren bestehen, insbesondere basierend auf mindestens zwei erkannten Maximal der Häufigkeitsverteilung;
Und insbesondere: Ableiten von einer der Anzahl der Maxima entsprechenden Anzahl von Fahrspurverläufen aus der zuletzt bestimmten Ausgleichskurve.

8. Vorrichtung, umfassend elektronische Rechen und Speichermittel, wobei die Vorrichtung dazu eingerichtet ist ein Verfahren nach einem der vorhergehenden Ansprüche auszuführen,
wobei die Vorrichtung dazu eingerichtet ist, dass die Speichermittel zumindest die verwendeten einzelnen Positionsangaben und Parameter der initialen und jeweils neu bestimmten Ausgleichskurve speichern.

9. Computerprogramm, das derart ausgebildet ist, bei seiner Ausführung einen Computer zur Ausführung eines Verfahrens nach einem der Ansprüche 1 bis 7 zu veranlassen.

## Claims

1. A method for determining the course of a lane with the aid of a plurality of recorded routes (5) of vehicles using a compensation curve,
wherein each route of the plurality of routes (5) comprises individual position indications in an order of passing during the journey in question;
wherein the method comprises:

determining those routes from the plurality of routes that follow the same lane and/or represent the same driving manoeuvre;
reducing the plurality of routes to the determined routes, so that only these are still included in the plurality of routes;
selecting a route from the plurality of routes;
determining the number of checkpoints for the compensation curve on the basis of the selected route;
determining an initial compensation curve (7) on the basis of the number of checkpoints and the selected route from the plurality of routes;
repeating the following step until a termination criterion is met:

determining a new compensation curve (10) using the previously determined compensation curve (9) and individual position indications of the routes of the plurality of routes,
wherein the determination of the new compensation curve is independent of the order of the position indications in one of the particular routes and is independent of the fact that a used position indication is associated with a route from the plurality of routes;
outputting the last-determined compensation curve as lane course.

2. A method according to claim 1, wherein the determination of those routes from the plurality of routes (5) that follow the same lane comprises the following for each route:

determining whether a position indication of the particular route lies in a first predefined position region and a position indication of the same particular route lies in a second predefined position region.

3. A method according to either one of the preceding claims, wherein the determination of the number of checkpoints for the compensation curve comprises:

dividing the length of the randomly selected route by a predefined divisor length;
selecting the number of checkpoints on the basis of the result of the division.

4. A method according to any one of the preceding claims, wherein the determination of the new compensation curve comprises a multiplication of matrices, of which at least one matrix comprises the used individual position indications.

5. A method according to any one of the preceding claims, further comprising:

determining whether there is a threat of collision of a vehicle with another road user using the outputted compensation curve;

displaying a warning of the potential forthcoming collision.

6. A method according to any one of the preceding claims, wherein the position indications have been determined more especially with the aid of a satellite navigation system.

7. A method according to any one of the preceding claims, also comprising the following steps, which are performed following the last determination of the new compensation curve:

for a portion of the compensation curve, wherein the portion more especially comprises the entire compensation curve:

for the used position indications in the portion of the compensation curve: determining the shortest distance between the position indication and the compensation curve;

determining the frequency distribution depending on the distance;

determining whether the frequency distribution indicates that there are at least two parallel lanes, more especially on the basis of at least two identified maxima of the frequency distribution;

and more especially: deriving a number of lane courses corresponding to the number of maxima from the last-determined compensation curve.

8. Apparatus, comprising electronic processing and memory means, wherein the apparatus is designed to perform a method according to any one of the preceding claims,

wherein the apparatus is designed such that the memory means store at least the used individual position indications and parameters of the initial and newly determined compensation curve respectively.

9. A computer program designed in such a way that, when executed, it prompts a computer to perform a method according to any one of claims 1 to 7.

**Revendications**

1. Procédé permettant de déterminer le tracé d'une voie de circulation à l'aide d'une série de tracés de circulation enregistrés (5) de véhicules en utilisant une courbe de régression,

selon lequel chaque tracé de circulation de l'ensemble de trajets de circulation (5) comprend des données de position individuelles dans l'ordre du passage pendant chaque circulation,

le procédé comprenant des étapes consistant à :

déterminer à partir de l'ensemble de tracés de circulation les tracés de circulation qui suivent la même voie de circulation et/ou représentent la même manoeuvre de circulation,

réduire l'ensemble de tracés de circulation aux tracés de circulation ainsi déterminés de sorte que seuls ces tracés soient encore compris dans l'ensemble de tracés de circulation,

sélectionner un tracé de circulation parmi l'ensemble de tracés de circulation,

déterminer une série de points de contrôle pour la courbe de régression sur le fondement du tracé de circulation sélectionné,

déterminer une courbe de régression initiale (7) sur le fondement de la série de points de contrôle et du tracé de circulation sélectionné parmi l'ensemble de tracés de circulation,

réitérer les étapes suivantes jusqu'à ce qu'un critère d'arrêt ou d'interruption ait été rempli,

déterminer une nouvelle courbe de régression (10) en utilisant la courbe de régression (9) déterminée auparavant et des données de position individuelles des tracés de circulation de l'ensemble de tracés de circulation,

la détermination de la nouvelle courbe de régression étant indépendante de l'ordre des données de position dans l'un des tracés de circulation et indépendante du fait qu'une donnée de position utilisée soit associée à un tracé de circulation parmi l'ensemble de tracés de circulation, délivrer en sortie la courbe de régression finalement déterminée en tant que tracé de la voie de circulation.

2. Procédé conforme à la revendication 1,

selon lequel la détermination à partir de l'ensemble de tracés de circulation (5) des tracés de circulation qui suivent la même voie de circulation comprend, pour chaque tracé de circulation, l'étape suivante consistant à :

déterminer si une donnée de position du tracé de circulation respectif est située dans une première zone de positions prédéfinie et si une donnée de position du même tracé de circulation respectif est située dans une seconde zone de positions prédéfinie.

3. Procédé conforme à l'une des revendications précédentes, selon lequel l'étape de détermination de la série de points de contrôle pour la courbe de régression comprend les étapes suivantes consistant à :

subdiviser la longueur du tracé de circulation sélectionné fortuitement par une longueur de diviseur prédéfinie, sélectionner la série de points de contrôle sur le fondement du résultat de la subdivision.

4. Procédé conforme à l'une des revendications précédentes, selon lequel l'étape de détermination de la nouvelle courbe de régression comprend la multiplication de matrices parmi lesquelles au moins une matrice renferme les données de position individuelles utilisées.

5. Procédé conforme à l'une des revendications précédentes, comprenant en outre des étapes consistant à :

déterminer si une collision d'un véhicule avec un autre participant au trafic menace en utilisant la courbe de régression délivrée en sortie, délivrer un avertissement concernant une collision imminente.

6. Procédé conforme à l'une des revendications précédentes, selon lequel les données de position ont en particulier été déterminées à l'aide d'un système de navigation par satellite.

7. Procédé conforme à l'une des revendications précédentes, comprenant en outre les étapes suivantes mises en oeuvre après la dernière détermination de la nouvelle courbe de régression consistant à :

pour un segment de la courbe de régression, ce segment comprenant en particulier la totalité de la courbe de régression, pour les données de position utilisées dans le segment de la courbe de régression, déterminer la plus courte distance respective entre la donnée de position et la courbe de régression, déterminer la distribution de fréquence en fonction de la distance, déterminer si la distribution de fréquence indique qu'il y a au moins deux voies de circulation parallèles, en particulier sur le fondement d'au moins deux maxima identifiés de la distribution de fréquence, et en particulier déduire un nombre de tracés de voies de circulation correspondant au nombre de maxima à partir de la courbe de régression déterminée en dernier lieu.

8. Dispositif comprenant des calculateurs électroniques et des moyens de mémoire, ce dispositif étant susceptible de mettre en oeuvre un procédé conforme à l'une des revendications précédentes, ce dispositif étant conçu de sorte que les moyens de mémoire enregistrent au moins les données de positions individuelles utilisées, et des paramètres des courbes de régression initiale et nouvellement déterminée respectives.

9. Programme d'ordinateur réalisé pour permettre lors de sa mise en oeuvre à un ordinateur de mettre en oeuvre un procédé conforme à l'une des revendications 1 à 7.

**Fig. 1**

**Fig. 2**

Fig. 3

Fig. 4

Häufigkeit der
Entfernungen
vom jeweiligen
Fußpunkt

0

Entfernung vom
jeweiligen Fußpunkt

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

•   WO 2007010317 A1

**In der Beschreibung aufgeführte Nicht-Patentliteratur**

•   **A. SCHINDLER.** Exploiting arc splines for digital maps. *14th International Conference on Intelligent Transportation Systems (ITSC),* 2011

•   **W. WANG.** Fitting b-spline curves to point clouds by squared distance minimization. *ACM Transactions on graphics,* 2004